# EUROPEAN PATENT APPLICATION

(11) **EP 4 841 851 A1**
(43) Date of publication of application: **18.11.2026**
(21) Application number: 25176321.5
(22) Date of filing: 14.05.2025
(51) Int. Cl.: H02J 3/38, F03D 7/02

(54) **REACTIVE POWER CONTROL AND LOCAL VOLTAGE CONTROL FOR WIND TURBINES**

(71) Applicant: Nordex Energy SE & Co. KG, 22419 Hamburg (DE)
(72) Inventor: RUBEN, Mathias, 22419 Hamburg (DE); HAMANN, Niels, 22419 Hamburg (DE)
(74) Representative: Elion IP, S.L.

(57) **Abstract**

A wind turbine, comprising: an electrical generator; a rotor coupled to the electrical generator, the rotor comprising a plurality of blades; and a control system configured to: obtain a power-related setpoint from at least one controller of a wind farm of the wind turbine; obtain a major voltage in the wind farm; provide a product of the power-related setpoint and a factor; provide a difference between the major voltage and the product; apply a function to the difference to provide an adjusted difference; and provide a voltage setpoint for controlling at least one converter of the wind farm, the voltage setpoint being at least proportional to a sum of the product and the adjusted difference.

## Description

### TECHNICAL FIELD

The present disclosure relates to the field of wind farms and wind turbines. More particularly, the present disclosure relates to, but is not limited to, control systems, wind turbines and methods associated therewith for reactive power control and local voltage control.

### BACKGROUND

Local voltage control at wind farms and, particularly, at wind turbines, is an essential aspect of the operation thereof and that of the electric grid. As grid-forming keeps being embraced more and more as the new paradigm of wind turbines, local voltage control gains even more relevance at operation level because the wind turbines may cause instability, or greater levels of instability, to the electric grid. Accordingly, special care must be taken regarding the reactive power that wind turbines shall provide to or absorb from the electric grid to avoid problems in the electric grid like, for example, during fault events of the latter.

To reduce the likelihood of a wind farm or parts thereof halting their operation when there is a fault in the electric grid, fault-ride-through (FRT) configurations are applied to the wind turbines. FRT configurations intend to maintain the wind turbines active for some time during a fault event at the electric grid, which may also assist the electric grid to recover from the fault. In this sense, the local control of the voltage at wind turbines is generally made dependent upon a reactive current over voltage, at least during fault events. A reference or local voltage setpoint is usually set at the nominal voltage or an average value of the measured voltage.

There have been developments aimed at changing how the reference voltage setpoint is to be set to improve overall performance. For example, patent document US 9920745 B2 describes a local control, at the wind turbine, based on a dual structure having a first channel with a desired value applied by a wind farm control for outputting a stationary reactive power desired value and a second channel with an actual voltage of the wind turbine having a washout filter applied thereto, thereby providing continuous voltage control with droop. The second channel provides a fast and dependent response to transient disturbances, such as voltage spikes and voltage dips as a result of a short circuit. However, such control raises the problem of coordination between the local voltage setpoint and the simultaneous reactive power setpoint which is potentially received from the wind farm control.

Reactive power setpoint changes lead to voltage changes that agitate the voltage droop control. This, in turn, requires adjusting the reactive power setpoint or the voltage setpoint to maintain a desired total reactive power output, for example, the filtered measured voltage in said patent document. And depending on the characteristics of the filter or an averaging function used on the measured voltage, the local control may not react fast enough when reactive power must be supplied or absorbed by the wind farm, or react too fast that oscillations may be produced in the reactive power, thereby causing instability.

There is an interest in providing enhanced power and local voltage control that at least reduces, or even overcomes, some or all of the aforesaid shortcomings.

### SUMMARY

An aspect of the disclosure relates to a wind turbine. The wind turbine includes an electrical generator, a rotor coupled to the electrical generator and having a plurality of blades and a control system. The control system is configured to obtain a power-related setpoint from at least one controller of a wind farm of the wind turbine. The control system is also configured to obtain a major voltage in the wind farm. The control system is also configured to provide a product of the power-related setpoint and a factor. The control system is also configured to provide a difference between the major voltage and the product. The control system is also configured to apply a function to the difference to provide an adjusted difference. The control system is also configured to provide a voltage setpoint for controlling at least one converter of the wind farm. The voltage setpoint is at least proportional to a sum of the product and the adjusted difference.

Another aspect of the disclosure relates to a control system. The control system may be configured to control operation of one or more wind turbines or converters thereof. The control system is configured to perform steps such as: obtaining a power-related setpoint from at least one controller of a wind farm; obtaining a major voltage in the wind farm; providing a product of the power-related setpoint and a factor; providing a difference between the major voltage and the product; applying a function to the difference to provide an adjusted difference; and providing a voltage setpoint for controlling at least one converter of the wind farm. The voltage setpoint is at least proportional to a sum of the product and the adjusted difference.

Another aspect of the disclosure relates to a wind farm. The wind farm includes a plurality of wind turbines with a respective electrical generator and rotor coupled thereto, with the rotor having a plurality of blades. The wind turbines may have a control system or the wind farm may include a control system. The control system is configured to conduct tasks such as: obtaining a power-related setpoint from at least one controller of the wind farm; obtaining a major voltage in the wind farm; providing a product of the power-related setpoint and a factor; providing a difference between the major voltage and the product; applying a function to the difference to provide an adjusted difference; and providing a voltage setpoint for controlling at least one converter of the wind farm. The voltage setpoint is at least proportional to a sum of the product and the adjusted difference.

Another aspect of the disclosure relates to a method. The method includes obtaining a power-related setpoint from at least one controller of a wind farm. The method also includes obtaining a major voltage in the wind farm. The method also includes providing a product of the power-related setpoint and a factor. The method also includes providing a difference between the major voltage and the product. The method also includes applying a function to the difference to provide an adjusted difference. **The** method also includes providing a voltage setpoint for controlling at least one converter of the wind farm. The voltage setpoint is at least proportional to a sum of the product and the adjusted difference.

Another aspect of the disclosure relates to a non-transitory computer-readable storage medium including instructions, and/or relates to a computer program including instructions, the instructions at least causing one or more computing devices to: obtain a power-related setpoint from one or more controllers of a wind farm; obtain a major voltage in the wind farm; provide a product of the power-related setpoint and a factor; provide a difference between the major voltage and the product; apply a function to the difference to provide an adjusted difference; and provide a voltage setpoint for controlling at least one converter of the wind farm. The voltage setpoint is at least proportional to a sum of the product and the adjusted difference.

Another aspect of the disclosure relates to a computing device or system comprising means adapted to execute steps of a method. The method includes obtaining a power-related setpoint from at least one controller of a wind farm. The method also includes obtaining a major voltage in the wind farm. The method also includes providing a product of the power-related setpoint and a factor. The method also includes providing a difference between the major voltage and the product. The method also includes applying a function to the difference to provide an adjusted difference. The method also includes providing a voltage setpoint for controlling at least one converter of the wind farm. The voltage setpoint is at least proportional to a sum of said product and said adjusted difference.

The means may include, for example, at least one processing device and at least one memory that, for example, stores instructions for execution by the at least one processing device.

The computing device or system can control the operation of one or more wind turbines to provide the wind turbines with reactive power control and voltage control. To this end, in some embodiments, the computing device or system is part of a controller of a wind turbine or a wind farm. The computing device or system may be arranged in a wind turbine, in a control center of the wind farm, or be remote therefrom.

Additional advantages and features of the present disclosure will become apparent from the detailed description that follows.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a control system at a wind farm in accordance with some embodiments.
Figure 2 shows a control system at a wind farm in accordance with some embodiments.
Figure 3 shows part of a control system in accordance with some embodiments.
Figure 4 shows part of a control system in accordance with some embodiments.
Figure 5 shows a control system at a wind farm in accordance with some embodiments.
Figure 6 shows a method in accordance with some embodiments.
Figure 7 shows an example of a power response of a main converter when controlled with a control system in accordance with some embodiments.

### DETAILED DESCRIPTION

The different aspects and examples described in the foregoing and down below may be combined with one another unless indicated otherwise. For the sake of clarity only, in the following examples reference will be made to a method, but it will be understood that the examples are likewise applicable to the other aspects (i.e., control system, wind turbine, wind farm, non-transitory computer-readable storage medium, computer program) unless indicated otherwise.

The aspects of the present disclosure provide wind turbines with a control or provides a control for wind turbines that makes the wind turbines capable of providing a power response in a reduced timeframe (e.g., below 100 ms, preferably below 50 ms), making it particularly suitable for, inter alia, situations in which the load or electric grid (namely, the device, system or network that the wind farm connects to) has a disturbance that causes a reduction of voltage and/or electric power. Moreover, the control makes the wind turbines capable of providing such power response without introducing power oscillations, or with the introduction of small power oscillations. When the wind farm is connected to an electric grid, both of these capabilities are particularly relevant for certain grid codes that may be set for the electric grid by the operator thereof, and even more so when the grid codes include grid-forming requirements.

The wind farm control provides a power-related setpoint that one or more wind turbines (e.g., all active wind turbines of the wind farm) are to fulfill. The setpoint may be set in any term or terms that allows defining intended power limits. The power-related setpoint is obtained at the respective wind turbine for its local control to use for the power response of the wind turbine, both the wind turbine generator and the main converter thereof. The power-related setpoint is processed such that a product between the power-related setpoint and the factor, e.g., a factor that may be dynamically calculated (even in real time or almost in real time) or set beforehand, is provided. The product provided is a modified version of the power-related setpoint.

The obtained power-related setpoint may be a setpoint for, e.g., a complex apparent power (S), a reactive power (Q), a reactive current (i_{Q}), a power factor (pf), a phase angle (φ) between current and voltage, or a combination thereof. The power-related setpoint used in the provision of the product may be processed before providing the product, for example, processed by the local controller of the wind turbine to set the power-related setpoint in accordance with the ongoing operation of the wind turbine; alternatively, the power-related setpoint may be as obtained from the wind farm control.

The major voltage is also obtained as part of the monitoring of the electric grid that is conducted during operation of the wind farm. A modified voltage is provided by processing the voltage and the product such that a difference between is computed. To this end, the voltage preferably has the product subtracted therefrom, but the other way around is also possible, i.e., the product has the voltage subtracted; as it is apparent, other variations yielding the same or equivalent results are also possible and they all fall within the scope of the disclosure like, for example but without limitation, a product having opposite sign. In some examples, the major voltage comprises one of: a wind turbine terminal voltage, an output voltage of the at least one converter, a voltage at a point of common coupling, or a grid voltage.

Once the difference has been provided, a function, e.g., a function that may be set beforehand or dynamically calculated, is applied to said difference to obtain the adjusted difference. By way of example, the function may provide a delayed version of the difference and/or a difference with adjusted amplitude.

The adjusted difference and the product are then processed such that a sum of at least these two terms is provided. The sum may afterwards be processed to provide the voltage setpoint of the wind turbine, which is to control the operation of the at least one converter, preferably the main converter of the respective wind turbine. Said voltage setpoint may be equal to the sum or be proportional to the sum, i.e., a modifying factor is applied to the sum for adjustment thereof.

The voltage setpoint provides a continuous reactive current voltage droop function or reactive power voltage droop function while the wind farm provides the power-related setpoint that the wind turbine is to fulfill. Accordingly, the power response of the wind turbine may be in line with the requirement of the wind farm control yet provide an enhanced power response when there are changes to the voltage and, thus, to the power of the load, system or network associated with the major voltage. In this sense, changes in power-related setpoint may be processed in a relatively slow manner, thereby enhancing stability, while at the same time having fast voltage control with droop when the major voltage changes. Prompt and accurate responses to power-related setpoint changes of the wind farm control are also made possible in spite of having droop control. A respective wind farm may thus include at least one converter configured to provide a continuous reactive current voltage droop function or continuous reactive power voltage droop function.

The control is therefore also suitable for wind farm installations that are off-grid or installations that feature weak grid connection. In this respect, in some examples, the wind turbine or the concerned wind farm is off-grid whereas, in some other examples, the wind turbine or the concerned wind farm is on-grid.

The method is preferably conducted by one or more controllers, which may be at least one controller of a respective wind turbine, for conducting the control at local level.

In some embodiments, the sum or the voltage setpoint is constrained by an upper bound and/or a lower bound.

The value of the sum or the voltage setpoint based on the sum is limited to upper and/or lower limiting bounds to force the value to not exceed a given range. Despite the balance struck between the power-related setpoint and the droop control, possible spurious events could eventually cause a too large or too small value of the sum or setpoint, therefore bounds reduce the impact of such events.

In some embodiments, the factor is configured to represent a factor of an impedance and/or reactance influencing changes of the major voltage due to system parameters.

By way of example, in some cases, the system parameters comprise a power-related setpoint change such as, e.g., a change in a setpoint concerning reactive power.

In some embodiments, the factor includes an estimation of a correlation between power change and voltage change.

Such a factor, which may be any known in the art (e.g., impedance, reactance, complex impedance of e.g., transformers, cables, power lines), allows providing a voltage setpoint reliably adapted to the power-related setpoint of the wind farm control.

In some embodiments, providing the voltage setpoint further includes applying the voltage setpoint to a continuous reactive current voltage droop function or continuous reactive power voltage droop of the at least one converter.

The at least one converter, which is preferably associated with the wind turbine for which the control is being conducted, has the voltage setpoint provided for the power response of the at least one converter to be improved.

In some embodiments, the function includes a first order lag function and/or an averaging function.

Lag and averaging functions have been found to be functions providing an adequate value for the sum and, thus, for the voltage setpoint provided as part of the control.

In some embodiments, the function at least includes the averaging function, the averaging function being a moving average function.

The moving average adapts the value of the sum and, thus, of the voltage setpoint to the situation of the load, system or network (e.g., transmission grid) associated with the major voltage at any time. The resulting values provide a more accurate voltage and reactive power control as they take the ongoing status of the load, system or network into account.

In some embodiments, obtaining the major voltage includes providing the voltage with a value when the major voltage or a voltage in the wind turbine exceeds a deadband.

The value is, e.g., a value computed in real time or almost in real time, or be a predetermined value. The value causes provision of a given voltage in situations in which there is uncertainty in the major voltage or the voltage is out of the deadband, e.g., a predetermined deadband. This may occur during fault events (e.g., disturbances) in which **FRT** must be applied to the operation of the wind turbines. Accordingly, in these situations, despite the problematic major voltage, the method can be run and provide adequate values by using the value for the voltage. In some embodiments, the value for the voltage is a frozen value. In some other embodiments, the value is not a frozen value.

The time that the value is applied to the voltage may be configured. For example, the time may be dynamically set to at least the minimum time necessary for the voltage value not exceed the deadband, i.e., the voltage value be within the deadband; the time may be set to also include additional delay time to wait after the voltage value returns to the deadband. By way of another example, the time may be set to be a certain amount of time, e.g., 5 seconds; if, once the time has elapsed, the major voltage is still outside the deadband, a further time may be provided with our without changing the value for the voltage.

In some embodiments, obtaining the power-related setpoint includes providing the power-related setpoint with a value when the major voltage or a voltage in the wind turbine exceeds a deadband.

The value is, e.g., a value computed in real time or almost in real time, or be a predetermined value. The value causes provision of a given power-related setpoint in situations in which there is uncertainty in the major voltage or the voltage is out of the deadband. In some embodiments, the value for the power-related setpoint is a frozen value. In some other embodiments, the value is not a frozen value.

As described before, the time that the value is applied to the power-related setpoint may be configured to be dynamically adjusted to the minimum time necessary to use values related to the major voltage with no effects of the fault, or be set to be a certain amount of time irrespective of the situation of the load, system or network associated with the major voltage.

In some embodiments, the method further includes replacing the provided voltage setpoint with a voltage setpoint when a voltage in the wind turbine exceeds a deadband.

The voltage setpoint value is, e.g., a value that causes provision of a given voltage setpoint in situations in which there is uncertainty in the major voltage or the voltage is out of the deadband. In some embodiments, the value for the power-related setpoint is a frozen value. In some other embodiments, the value is not a frozen value.

As before, the time that the value is applied to the voltage setpoint may be configured in a fixed or a dynamic manner.

In some embodiments, the voltage setpoint is used by the at least one converter while implementing a reactive current droop or a reactive power droop.

In some embodiments, the product is an equation at least including a first term corresponding to the product of the power-related setpoint and the factor, and a second term.

The second term may be an offset term for improving initialization of the product.

In some embodiments, the product is provided in the form of a complex number.

At least one of the terms of the product may be a complex number, such as the factor including, e.g., a complex impedance, a complex power output, a complex current output, etc.

In some embodiments, the at least one controller is configured to control one or more wind turbines of the wind farm and/or the at least one converter.

In some embodiments, the at least one controller includes or is at least one wind turbine controller.

The wind turbine controller, which has its control based on the parameters established by the wind farm control, provides operation parameters for the generator and the main converter associated with the wind turbine controller.

In some embodiments, the major voltage is a measured voltage or a voltage value or set of values received prior to the provision of the difference between the major voltage and the product. Concerning the latter, a device such as, e.g., a controller may transmit the voltage value or set of values in wired or in wireless form to, e.g., a control system, a computing device, a computing system, or the like, for processing.

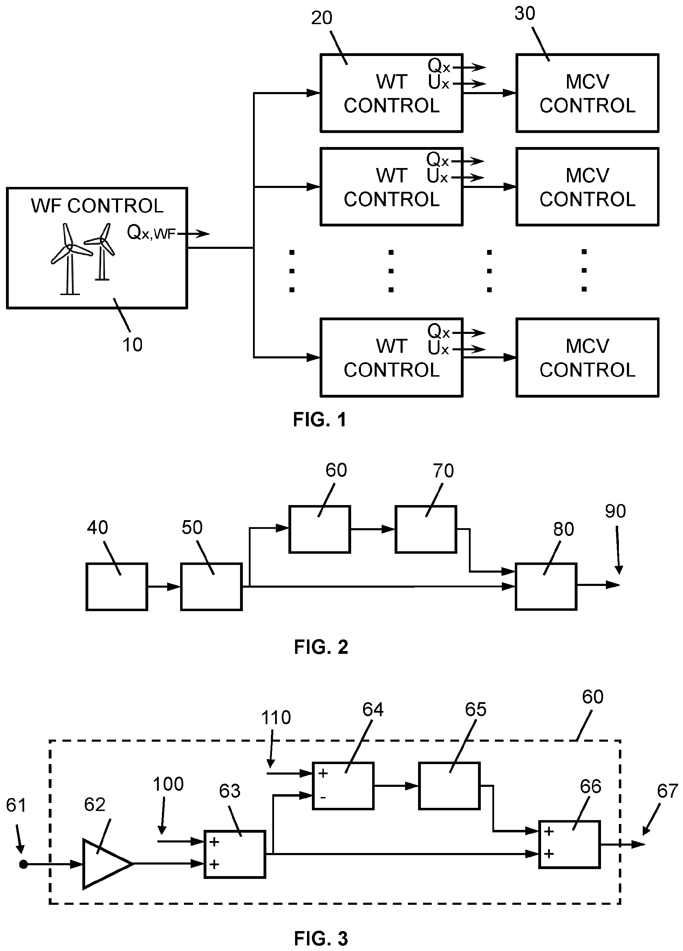

Figure 1 shows a control system at a wind farm in accordance with some embodiments.

The control system has a wind farm control 10. The control system also has a wind turbine control 20 per wind turbine, and a main converter control 30 per converter of wind turbine. Each control 10, 20, 30 of the control system which may be implemented by means of respective one or more computing devices or systems.

The wind farm control 10 controls the operation of the wind farm, including setpoints that wind turbines must fulfill or adhere to for correct operation of the wind farm, especially in relation to a load, system or network that the wind farm is connected to. To this end, the wind farm control 10 issues power-related setpoints (e.g., Q_{x,WF}) that are transmitted to the different wind turbines 20.

The wind turbine control 20 processes the power-related setpoint and may provide a respective power-related setpoint (e.g., Qₓ) adapted to its operation, but it may also provide the setpoint received from the wind farm control 10 (e.g., Q_{x,WF}) as it is. The wind turbine control 20 adjusts the operation of the respective wind turbine, e.g., the rotor of the wind turbine, the electrical generator of the wind turbine, etc., to fulfill the respective power-related setpoint as much as possible, and as quickly as possible, thereby providing active and reactive power output adapted to the requirements of the load, system or network that the wind farm is connected to.

Provision of a voltage setpoint is also part of the wind turbine control 20. The voltage setpoint (e.g., Uₓ), intended for the operation of the MCV control 30, establishes how the converter of the respective wind turbine is to operate to fulfill the power-related setpoint.

Depending on the situation of load, system or network, a major voltage thereof will vary and, consequently, the setpoints of the wind farm control 10 and the wind turbine control 20, i.e., the power-related setpoint and the voltage setpoint will have to be adjusted accordingly. By way of example, main converters of the wind farm may be supplying reactive power to the point of common coupling at times, whereas the main converters may be absorbing reactive power from the point of common coupling at other times.

Figure 2 shows a control system at a wind farm in accordance with some embodiments.

The control system includes a first controller 40 setting at least one power-related setpoint.

The control system also includes a second controller 50, which processes the at least one power-related setpoint and configures operation of the wind turbine and a main converter 80 thereof, eventually providing a reactive power at an output 90 corresponding to reactive power to be fed towards a point of common coupling, or to be absorbed from the point of common coupling.

The second controller 50 includes a first control module 60 configured to provide a voltage setpoint for a second control module 70.

The first controller 40 is part of a wind farm control system.

The second controller 50 is part of a wind turbine control system and/or part of a main converter control system. For example, in some embodiments, the first control module 60 is part of the wind turbine control system and the second control module 70 is part of the main converter control system. In some other embodiments, the first and second control modules 60, 70 are part of a main converter control system.

In some cases, the first and second control modules 60, 70 are provided as a single control module whereas, in some other cases, they are provided as separate control modules, such as, e.g., two or more (e.g., three, four, etc.) control modules. It will be noted that the terms "first" and "second" are for the sake of clarity only and are not to be understood in a limiting sense, the respective controllers could as well be named "second control module" and "first control module", for example, or simply "control modules".

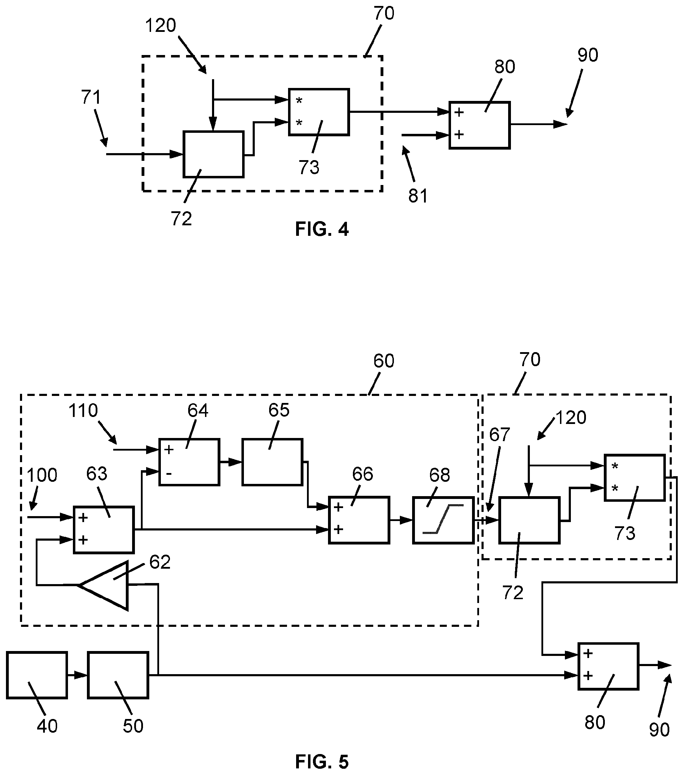

The first control module 60 and the second control module 70 will be described in more detail with reference to Figures 3 and 4.

Figure 3 shows part of a control system in accordance with some embodiments.

The control module 60 provides a product 62 of a power-related setpoint 61, which may be a processed version of the power-related setpoint issued by the first controller 40 or second controller 50, and a factor. The factor may be determined based, for example, on one or more parameters received from a local power control of the second controller 50.

The product 62 may be processed optionally together with a configured additional input 100, for initializing the product 62 and calculate an adjusted version 63 thereof.

A difference 64 between a major voltage 110 obtained and the product 62, 63 is provided. The difference 64 is then processed such that a function is applied to the difference so as to provide an adjusted difference 65. The function may be, by way of example, a first order lag function and/or an averaging function.

A sum 66 may be provided in which at least two terms are summed together, a first term being the adjusted difference 65 resulting from the processing of the difference 64, and a second term being the product 62, 63, either in its original form or in its processed version. Further terms are provided in the sum 66 in some embodiments, such as constant terms, for example.

The result of the sum 66 may be a voltage setpoint 67. The sum 66 may be processed prior to providing the voltage setpoint 67 to calculate an adjusted version of the sum 66, and/or the voltage setpoint 67 may be processed to calculate an adjusted version of the voltage setpoint 67.

Figure 4 shows part of a control system in accordance with some embodiments.

The control module 70 receives a voltage setpoint 71 from another control module and processes it together with a measured voltage 120 so as to provide a continuous reactive current voltage droop function or reactive power voltage droop function 72.

Further, a product 73 between the measured voltage 120 and a reactive current of the droop function or reactive power voltage droop function 72 is provided to obtain a reactive power with droop.

The main converter 80 receives both the reactive power with droop of the product 73 and a power-related setpoint provided at input 81 from the wind turbine control system or the wind farm control system. Based on the reactive power and the setpoint, the main converter 80 provides the output 90 with the reactive power to be supplied or absorbed.

Figure 5 shows a control system at a wind farm in accordance with some embodiments.

In addition to the control and operations described with reference to Figures 2, 3 and 4, the control system of Figure 5 further includes, in the first control module 60, a bound operation 68 that upper-limits and/or bottom-limits, in this case, the sum 66. The bounded sum provides the voltage setpoint 67 for the second control module 70.

It will be noted that further terms and/or operations may be provided in the control system to tune the voltage setpoint 67 and the output 90 of the main converter 80.

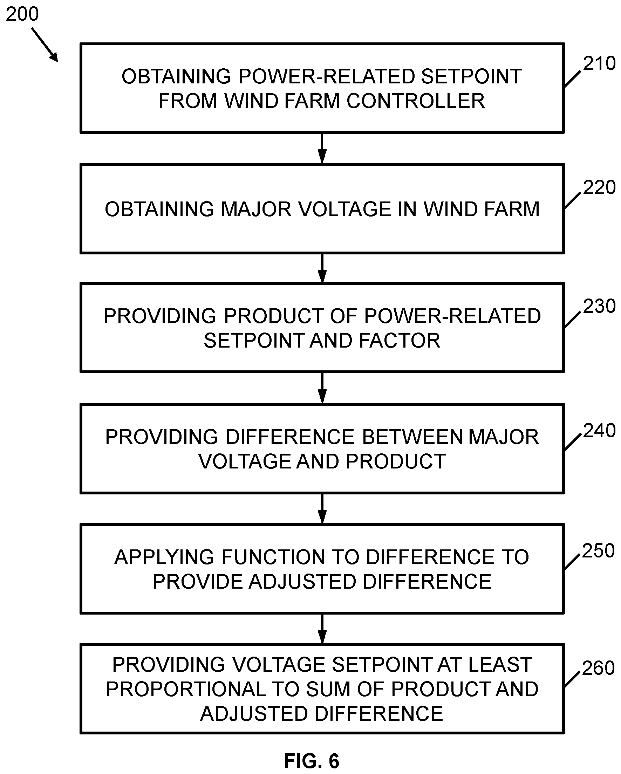

Figure 6 shows a method in accordance with some embodiments.

The method 200 may be conducted locally at a wind turbine, for example, by means of at least one control system thereof.

The method 200 includes a step whereby at least one computing device or system, e.g., at least one controller or control system, obtains 210 a power-related setpoint from at least one controller of a wind farm, for example from a wind farm control as illustrated in Figure 1. The at least one controller of the wind farm sets the power requirements for a given wind turbine or a given set of wind turbines, and said power requirements are obtained at the at least one computer device or system, e.g., through a wired or wireless communications link, for adjusting the operation of the respective wind turbine(s). The power-related setpoint comprises, e.g., one or more of: active and reactive power setpoints, a reactive current setpoint, a power factor setpoint, and/or a phase angle setpoint between current and voltage.

The method 200 further includes a step whereby the at least one computing device or system obtains 220 a major voltage in the wind farm. The major voltage may be measured or determined with, for example, at least one processing device or system controlling the situation of a load, system or network that the wind farm is connected to through a point of common coupling. The major voltage is obtained by the at least one computing device or system, either through measurements made at, e.g., a wind turbine terminal, at an output of a converter, or at the point of common coupling or transmitted thereto, e.g., through a wired or wireless communications link. The major voltage comprises, in some cases, a voltage grid.

The method 200 further includes a step whereby the at least one computing device or system provides 230 a product of the power-related setpoint obtained 210 and a factor. By way of example, the factor may be established such that it represents a factor of an impedance and/or reactance influencing changes of the major voltage due to parameters set in the wind turbine or wind farm, and/or such that it estimates a correlation between power change and voltage change.

The method 200 further includes a step whereby the at least one computing device or system provides 240 a difference between the major voltage obtained 220 and the product provided 230.

The method 200 further includes a step whereby the at least one computing device or system applies 250 a function to the difference provided 240 to provide an adjusted difference.

The method 200 further includes a step whereby the at least one computing device or system provides 260 a voltage setpoint. The voltage setpoint is at least proportional to a sum of the product and the adjusted difference. The voltage setpoint allows to control at least one converter of the wind farm, like the main converter of a respective wind turbine.

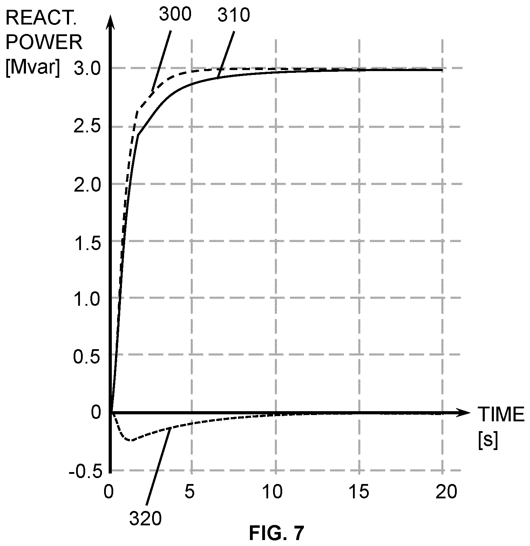

Figure 7 shows an example of a power response of a main converter when controlled with a control system in accordance with some embodiments. Figure 7 shows such example with a chart that represents a power-related setpoint 300 of a wind farm control, a power response 310 of a wind turbine, and a variation in power 320 of a main converter associated with the wind turbine of the power response 310.

The illustrated power responses and setpoint relate to reactive power. As it can be seen, the setpoint 300 of the wind farm requires a large and fast power response from the wind turbine based on a situation at the point of common coupling.

The control of the wind turbine conducted according to embodiments of the present disclosure enables a measured power response 310 that gets close to the setpoint 300, with differences between the setpoint 300 and the power response 310 being, for the most part, below 10% in power and time response. The variation in power 320 due to the main converter reactive current voltage droop may be kept low with the improved voltage setpoint while the power response 310 is fast.

Although some examples and embodiments may include a particular sequence of operations, the sequence may in some cases be altered without departing from the scope of the present disclosure. For example, some of the operations depicted may be performed in parallel or in a different sequence that does not materially affect the functions as described in the examples; by way of example, steps as described with reference to the methods of Figures 3 and 4, according to some examples, may not follow the sequence depicted in the figures. In other examples, different components of an example device or system that implements an example method may perform functions at substantially the same time or in a specific sequence.

As used herein, the terms "processing device" and "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines. In some examples, the processor or processors may be located in a single location, while in other examples the processors may be distributed across a number of locations.

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc. In this text, the term "major" in major voltage is not to be understood in a limiting sense, and the term major voltage could as well be named "reference voltage" or "target voltage", for example, or simply "voltage".

On the other hand, the disclosure is obviously not limited to the specific example(s) and embodiment(s) described herein, but also encompasses any variations that may be considered by any person skilled in the art (for example, as regards the choice of materials, dimensions, components, configuration, etc.), within the general scope of the invention as defined in the claims.

## Claims

1. A wind turbine, comprising:
an electrical generator;
a rotor coupled to the electrical generator, the rotor comprising a plurality of blades; and
a control system configured to:
obtain a power-related setpoint (61) from at least one controller (10,20,40,50) of a wind farm of the wind turbine;
obtain a major voltage (110) in the wind farm;
provide a product (62,63) of the power-related setpoint (61) and a factor;
provide a difference (64) between the major voltage (110) and the product (62,63);
apply a function to the difference (64) to provide an adjusted difference (65); and
provide a voltage setpoint (67) for controlling at least one converter (80) of the wind farm, the voltage setpoint (67) being at least proportional to a sum (66) of the product (62,63) and the adjusted difference (65).

2. A control system configured to control operation of one or more wind turbines or converters thereof, the control system being configured to perform steps comprising:
obtaining (210) a power-related setpoint (110) from at least one controller (10,20,40,50) of a wind farm;
obtaining (220) a major voltage (110) in the wind farm;
providing (230) a product (62,63) of the power-related setpoint (61) and a factor;
providing (240) a difference (64) between the major voltage (110) and the product (62);
applying (250) a function to the difference (64) to provide an adjusted difference (65); and
providing (260) a voltage setpoint (67) for controlling at least one converter (80) of the wind farm, the voltage setpoint (67) being at least proportional to a sum (66) of the product (62,63) and the adjusted difference (65).

3. The wind turbine or the control system of any one of the preceding claims, wherein the sum (66) or the voltage setpoint (67) is constrained by an upper bound and/or a lower bound (68).

4. The wind turbine or the control system of any one of the preceding claims, wherein the factor is configured to represent a factor of an impedance and/or reactance influencing changes of the major voltage (110) due to system parameters.

5. The wind turbine or the control system of claim 4, wherein the system parameters at least comprise a power setpoint change.

6. The wind turbine or the control system of any one of the preceding claims, wherein the factor comprises an estimation of a correlation between power change and voltage change.

7. The wind turbine or the control system of any one of the preceding claims, wherein provision of the voltage setpoint (67) further comprises applying the voltage setpoint to a continuous reactive current voltage droop function (72) of the at least one converter (80).

8. The wind turbine or the control system of any one of the preceding claims, wherein the function comprises a first order lag function and/or an averaging function.

9. The wind turbine or the control system of any one of the preceding claims, wherein:
obtention of the major voltage (110) by the control system comprises providing the major voltage (110) with a first value when the major voltage (110) or a voltage in the wind turbine exceeds a deadband; and/or
obtention of the power-related setpoint (61) by the control system comprises providing the power-related setpoint (61) with a second value when the major voltage or a voltage in the wind turbine exceeds a deadband.

10. The wind turbine or the control system of any one of the preceding claims, wherein the first value is a frozen value and/or the second value is a frozen value.

11. The wind turbine or the control system of any one of the preceding claims, wherein the control system is further configured to, when a voltage in the wind turbine exceeds a deadband, replace the provided voltage setpoint (61) with a calculated voltage setpoint.

12. The wind turbine or the control system of any one of the preceding claims, wherein the product (63) is an equation at least comprising a first term corresponding to the product (62) of the power-related setpoint (61) and the factor, and a second term (100).

13. **The** wind turbine or the control system of any one of the preceding claims, wherein the major voltage (110) comprises one of:
a wind turbine terminal voltage;
an output voltage of the at least one converter;
a grid voltage; or
a voltage at a point of common coupling.

14. **The** wind turbine or the control system of any one of the preceding claims, wherein the power-related setpoint (61) comprises a reactive power setpoint and an active power setpoint.

15. A method (200) comprising:
obtaining (210) a power-related setpoint (61) from at least one controller (10,20,40,50) of a wind farm;
obtaining (220) a major voltage (110) in the wind farm;
providing (230) a product (62) of the power-related setpoint (61) and a factor;
providing (240) a difference (64) between the major voltage (110) and the product (62,63);
applying (250) a function to the difference to provide an adjusted difference (65); and
providing (260) a voltage setpoint (67) for controlling at least one converter (80) of the wind farm, the voltage setpoint (67) being at least proportional to a sum (66) of the product (62,63) and the adjusted difference (65).
